Europäisches Patentamt

European Patent Office

Office européen des brevets

(11) Veröffentlichungsnummer : **0 075 310**
**B1**

(12) EUROPÄISCHE PATENTSCHRIFT

(45) Veröffentlichungstag der Patentschrift :
12.02.86

(51) Int. Cl.⁴ : **H 04 L 1/14, H 04 Q 3/54**

(21) Anmeldenummer : **82108690.7**

(22) Anmeldetag : **20.09.82**

(54) Schaltungsanordnung für Fernmeldevermittlungsanlagen, insbesondere Fernsprechvermittlungsanlagen, mit Einrichtungen zur Sicherung der Übertragung codierter Signale.

(30) Priorität : **23.09.81 DE 3137904**

(43) Veröffentlichungstag der Anmeldung :
**30.03.83 Patentblatt 83/13**

(45) Bekanntmachung des Hinweises auf die Patenterteilung : **12.02.86 Patentblatt 86/07**

(84) Benannte Vertragsstaaten :
**AT CH FR GB LI SE**

(56) Entgegenhaltungen :
**DE-A- 2 423 260**
**DE-A- 2 727 533**
**FR-A- 1 583 211**
**FR-A- 2 298 911**
**GB-A- 2 032 736**
**US-A- 3 523 279**

(73) Patentinhaber : **Siemens Aktiengesellschaft**
**Berlin und München Wittelsbacherplatz 2**
**D-8000 München 2 (DE)**

(72) Erfinder : **Heyland, Ulrich, Dipl.-Ing.**
**Kleinfeldstrasse 55a**
**D-8034 Germering (DE)**
Erfinder : **Hoffmann, Gerald, Ing. grad.**
**Wangener Strasse 5**
**D-8137 Berg 2 (DE)**

## Beschreibung

Die Erfindung bezieht sich auf eine Schaltungsanordnung für Fernmeldevermittlungsanlagen, insbesondere Fernsprechvermittlungsanlagen, in denen binärcodierte Informationen über pro Codeelement je eine Leitungsader aufweisende Leitungen übertragen werden, und in denen ausgesendete Informationen sowohl an der Sendestelle gespeichert und einem Vergleicher zugeführt als auch nach ihrer Aussendung über die Leitung zurückerhalten werden, und in denen der Vergleicher die zurückerhaltenen Information empfängt und mit der gespeicherten Information vergleicht, und in denen zur Erhöhung der Überwachungssicherheit die Information sowie ein durch deren Invertierung gebildetes Komplement verwendet werden und der Vergleich von der Information und dem Komplement ausgeht, und in denen eine ausgesendete Information und deren Komplement nach ihrer Aussendung über die Leitung von einer Empfangseinrichtung aufgenommen werden und danach von derselben wieder zur Aussendung über die Leitung gebracht werden.

Das für eine Schaltungsanordnung dieser Art maßgebende Grundkonzept ist bereits durch die deutsche Offenlegungsschrift 2 423 260 bekannt. Danach wird zu Prüfzwecken die Adresse eines von einer Mehrzahl individueller Geräte ausgesendet und von dem betreffenden individuellen Gerät an die aussendende Einrichtung zurückgegeben. Ferner wird zu dem angesteuerten individuellen Gerät die invertierte Adresse ausgesendet und vom individuellen Gerät wieder an die sendende Einrichtung zurückgegeben. Ferner wird die ausgesendete Adresse mit der zurückgegebenen Adresse sowie die ausgesendete invertierte Adresse mit der zurückgegebenen invertierten Adresse verglichen. Ferner werden Vergleiche angestellt, einerseits zwischen der ausgesendeten Adresse und der zurückgegebenen invertierten Adresse sowie zwischen der ausgesendeten invertierten Adresse und der zurückgegebenen Adresse. Das bekannte Verfahren ermöglicht es, Fehler auf den der Übertragung und der Rückübertragung der Adressen und der invertierten Adressen dienenden Nachrichtenwegen zu erkennen und zu lokalisieren, sowie Fehler in Decodiereinrichtungen und Codiereinrichtungen in den individuellen Geräten, sowie in der sendenden Einrichtung, die die angedeutete Überprüfung vornimmt.

Für die Erfindung besteht die Aufgabe, eine Schaltungsanordnung anzugeben, in der gegenüber dem bekannten Verfahren auch der Lesevorgang aus dem Register gesichert ist und zwar in einer Weise, die möglichst wenige zusätzliche Schaltungsvorgänge erfordert.

Die Erfindung löst die gestellte Aufgabe dadurch, daß von den stets wiederkehrende Standardbefehle darstellenden Informationen jede einzeln zusammen mit ihrem Komplement in einer zusammenhängenden Reihe von Speichereinheiten eines Befehlsspeichers gespeichert ist, daß bei Aussendung einer Information über die Leitung der Vergleicher die Information und deren Komplement nach Erhalt, insbesondere nach einer Zwischenspeicherung, invertiert und eine Verschiebung der die Information und der das Komplement bildenden Bits vornimmt, wodurch beide ihre Plätze innerhalb des Vergleichers tauschen, und daß der Vergleicher das Ergebnis dieser Invertierung und Verschiebung mit der zurückerhaltenen Information und gegebenenfalls mit dem zurückerhaltenen Komplement auf Koinzidenz prüft, und daß Information und Komplement immer und in festem zeitlichen Zusammenhang ausgesendet und zurückgesendet werden.

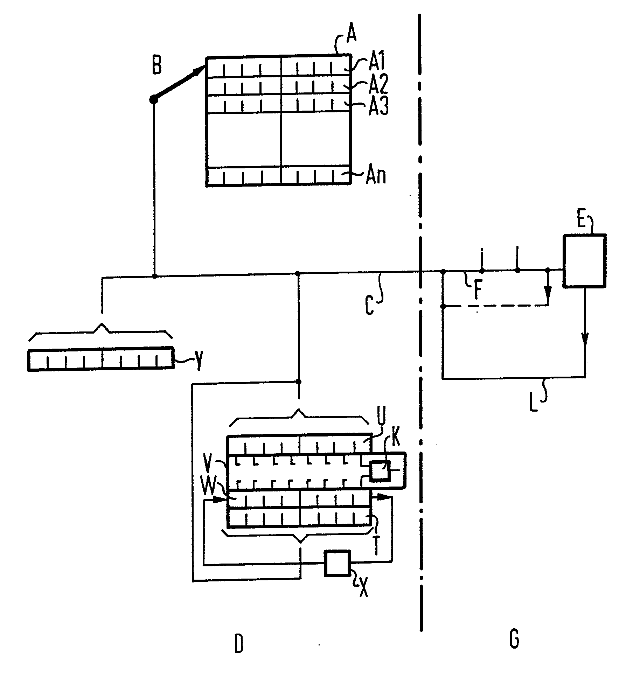

In der Zeichnung ist ein Ausführungsbeispiel der Erfindung nur in für ihr Verständnis wesentlichen Teilen dargestellt. Eine sendende Einrichtung D, künftig als « Befehlsgeber » bezeichnet, ist mit einer empfangenden Einrichtung G, künftig als « Befehlsempfänger » bezeichnet, über einen Nachrichtenbus C verbunden. Dieser dient der Übertragung mehrstelliger binärcodierter Steuerbefehle. Der Nachrichtenbus möge acht Leitungsadern zur Übertragung von 8-Bit-Informationen aufweisen.

In einem Befehlsspeicher A ist eine Anzahl von Speicherzeilen A1 bis An vorgesehen. Jede dieser Speicherzeilen ist zur Speicherung je einer 8-Bit-Information mit acht Speicherplätzen ausgestattet, wie es aus der Zeichnung hervorgeht. Desgleichen weist ein Zwischenspeicher Y, der ebenfalls mit dem Nachrichtenbus C verbunden ist, acht Speicherplätze auf. Auch weisen Register U und W eines Vergleichers V je acht Speicherplätze auf.

In den Speicherzeilen A1 bis An ist je ein Steuerbefehl pro Speicherzeile permanent gespeichert. Mit einer Leseeinrichtung B steuert der Befehlsgeber D jeweils eine Speicherzeile des Befehlsspeichers A an und bringt den darin gespeicherten Steuerbefehl in an sich bekannter Weiser über den Nachrichtenbus C zur Aussendung. Die einzelnen Bit des Steuerbefehls gelangen über den Nachrichtbus C zu einer Mehrzahl empfangender Einrichtungen im Befehlsempfänger G. Hierzu verzweigt sich der Nachrichtenbus C in einem inneren Leitungssystem F des Befehlsempfängers G. Eine der empfangenden Einrichtungen im Befehlsempfänger G ist angedeutet und mit « F » bezeichnet. Diese empfangende Einrichtung gibt nach Empfang eines Steuerbefehls dasjenige, was sie empfangen hat, über eine Leitungsschleife L auf den zentralen Nachrichtenbus C zurück, über den der ursprünglich ausgesendete Steuerbefehl also vom Befehlsempfänger G zum Befehlsgeber D zurückgegeben wird.

Mit dem ausgesandten Steuerbefehl stimmt der zurückgegebene Steuerbefehl überein, sofern der Vorgang der Übertragung des Steuerbefehls einschließlich des Lesevorganges seitens der Leseeinrichtung B, des Empfangsvorganges in der empfangenen Einrichtung E, des Rücksendevorganges seitens derselben und eines Empfangsvorganges seitens des Vergleichers V mit Hilfe seines Registers U fehlerfrei abgelaufen ist.

Einer Überwachung eines fehlerfreien Ablaufes der Übertragungsvorgänge jedes der Steuerbefehle dient der Vergleicher V mit seinen Registern U und W sowie mit seinem Inverter T und mit einer Verschiebeeinrichtung X. Ferner dient diesem Zweck ein Zwischenspeicher Y.

An dieser Stelle ist einzufügen, daß ein Steuerbefehl tatsächlich nur aus einer 4-Bit-Information besteht. Diese ist jeweils im linken Teil jeder der Speicherzeilen A1 bis An gespeichert. Im rechten Teil jeder dieser Speicherzeilen ist jeweils das Komplement des Steuerbefehls gespeichert. In einer Speicherzeile sind also immer zusammen ein Steuerbefehl und sein Komplement gespeichert. Das Komplement eines Steuerbefehls ist durch dessen Invertierung in an sich bekannter Weise gebildet.

Kommt ein Steuerbefehl mit seinem Komplement über den Nachrichtenbus C zur Aussendung, so wird hierzu — wie bereits angegeben — die Leseeinrichtung B auf die betreffende Speicherzeile, z. B. A1, des Befehlsspeichers A eingestellt. Über die einzelnen Leitungsadern des Nachrichtenbusses C werden die einzelnen Bits des Steuerbefehls sowie seines Komplements ausgesendet und von der Empfangseinrichtung E aufgenommen. Steuerbefehl und Komplement gelangen außerdem in einen Zwischenspeicher Y, der ebenfalls zur Aufnahme einer 8-Bit-Information vorgesehen ist.

Nach Durchführung des Sendevorganges für den jeweiligen Steuerbefehl wird derselbe unverändert von der empfangenden Einrichtung E über die Leitungsschleife L zum Nachrichtenbus C zurückgegeben und über diesen vom Befehlsempfänger G zum Befehlsgeber D zurückübertragen und hier in das Register U eingeschrieben. Die vier Bit des Steuerbefehls gelangen wieder in den linken Teil und die vier Bit des Komplementes des Steuerbefehls gelangen in den rechten Teil des Registers U des Vergleichers V. Der Speicherinhalt des Speichers Y wird sodann über den Nachrichtenbus C zu einem Inverter T übertragen, der jeden der Binärwerte des Steuerbefehls und jeden der Binärwerte des Komplementes des Steuerbefehls in sein Gegenteil vertauscht. Bei der Aufnahme des Steuerbefehls und des Komplementes stehen zunächst die vier Bit des Steuerbefehls im linken Teil des Inverters T und die vier Bit des Komplements des Steuerbefehls im rechten Teil des Inverters T. Der Inverter T gibt sodann die Invertierung des Steuerbefehls und die Invertierung des Komplements weiter zu einem Register W, das als Schieberegister ausgebildet ist. Im linken Teil dieses Schieberegisters steht nun also die Invertierung des Steuerbefehls und im rechten Teil die Invertierung des Komplements. Danach nimmt eine Verschiebeeinrichtung X einen Austausch vor. Sie verschiebt jedes Bit der im Schieberegister W gespeicherten Gesamtinformation um vier Speicherplätze nach rechts. Hierbei entnimmt sie auf der rechten Seite des Schieberegisters W also die von demselben bei dem Schiebevorgang abgegebenen vier Bit des Inverswertes des Komplements und führt dieselben dem Schieberegister wieder von der linken Seite her zu. Dieser Verschiebevorgang hat zur Folge, daß im rechten Teil des Schieberegisters der Inverswert des Steuerbefehls steht und im linken Teil des Schieberegisters der Inverswert des Komplements. Nun aber ist der Inverswert des Komplements des Steuerbefehls identisch mit dem Steuerbefehl. Der Inverswert des Steuerbefehls ist identisch mit seinem Komplement. Sind nun alle Vorgänge, wie sie zuvor beschrieben wurden, fehlerfrei abgelaufen, so stehen sich im Register U und im Schieberegister W vom Vergleicher V her gesehen gleiche Gesamtinformationen gegenüber, d. h. jedes Bit an jeder Stelle des Registers U muß wertgleich jedem Bit an jeder Stelle des Schieberegisters W sein. Um dies zu überprüfen, sind acht Koinzidenzschaltungen vorgesehen, von denen nur eine dargestellt ist, die mit « K » bezeichnet ist. Die Ausgänge dieser acht Koinzidenzschaltungen können wiederum mit einer Koinzidenzschaltung mit acht Eingängen verbunden sein, mit deren Hilfe die Übereinstimmung aller acht Bit einerseits im Register U und andererseits im Schieberegister W überprüft wird.

Mit Hilfe der Erfindung ist es möglich, nicht nur Ein-Bit-Fehler sondern auch Mehr-Bit-Fehler zu erkennen, was z. B. mit einer Paritätskontrolle bei weitem nicht in jedem Fehlerfall möglich ist. Dennoch aber läßt sich die Erfindung mit sehr einfachen Mitteln, insbesondere unter Mitausnutzung von für die Abgabe von Steuerbefehlen erforderlichen Schaltmittel realisieren. Dabei ist auch die richtige Funktionsweise des Vergleichers, der den fehlerfreien Ablauf der Übertragungsvorgänge überwacht, dieser Überwachung selbst mit unterzogen.

**Patentanspruch**

1. Schaltungsanordnung für Fernmeldevermittlungsanlagen, insbesondere Fernsprechvermittlungsanlagen, in denen binärcodierte Informationen über pro Codeelement je eine Leitungsader aufweisende Leitungen (C, L) übertragen werden, und in denen ausgesendete Informationen sowohl an der Sendestelle (D) gespeichert und einem Vergleicher (V) zugeführt als auch nach ihrer Aussendung über die Leitung (C, L) zurückerhalten werden, und in denen der Vergleicher (V) die zurückerhaltenen Information empfängt und mit der gespeicherten Information vergleicht, und in denen zur Erhöhung der Überwachungssicherheit die Information sowie ein durch deren Invertierung gebildetes Komplement verwendet werden und der Vergleich von der Information und dem Komplement ausgeht, und in denen eine ausgesendete Information und deren Komplement nach ihrer Aussendung über die Leitung (C, L) von einer Empfangseinrichtung (E) aufgenommen werden und danach von derselben wieder zur Aussendung über die Leitung gebracht werden, dadurch gekennzeichnet, daß von den stets wiederkehrende Standardbefehle darstellenden Informationen jede einzeln zusammen mit ihrem Komplement in einer zusammenhängenden Reihe von Speichereinheiten eines Befehlsspeichers (A) gespeichert ist, daß bei Aussendung einer Information über die Leitung (C, L) der Vergleicher (V) die Information und deren Komplement nach Erhalt, insbesondere nach einer Zwischenspeicherung (in T), invertiert (in T) und eine Verschiebung (in W) der die Information und der das Komplement bildenden Bits vornimmt, wodurch beide ihre Plätze innerhalb des Vergleichers (V) tauschen, und daß der Vergleicher (V) das Ergebnis dieser Invertierung (in T) und Verschiebung (in W) mit der zurückerhaltenen Information (über U) und gegebenenfalls mit dem zurückerhaltenen Komplement (über U) auf Koinzidenz prüft, und daß Information und Komplement immer und in festem zeitlichen Zusammenhang ausgesendet und zurückgesendet werden.

## Claim

1. A circuit arrangement for telecommunications exchanges, in particular telephone exchanges, in which binary-coded information is transmitted by means of lines (C, L) which have a line wire for each code element, and in which transmitted information is both stored at the transmitting point (D) and fed to a comparator (V) and also re-stored after its transmission via the line (C, L), and in which the comparator (V) receives the re-stored information and compares it with the stored information, and in which in order to increase the monitoring security the information and a complement, which is formed by the inversion of the information, are used and the comparison of the information and the complement results, and in which a transmitted information item and its complement are received by a receiving device (E) after their transmission via the line (C, L) and are subsequently re-transmitted by said receiving device *via* the line, characterised in that of the items of information which represent constantly recurrent standard commands, each individual item of information together with its complement is stored in a continuous row of storage units of a command store (A), that when transmitting an information item via the line (C, L), the comparator (V) inverts (in T) the information and the complement thereof upon receipt, in particular after an intermediate storage (in T) and effects a displacement (in W) of the bit forming the information and the complement, whereby both exchange their places within the comparator (V), and that the comparator (V) tests the result of this inversion (in T) and displacement (in W) with the re-stored information (*via* U) and possibly with the re-stored complement (*via* U) in respect of coincidence, and that information item and complement are transmitted and re-transmitted constantly and in a fixed time relationship.

## Revendication

1. Montage pour installations de télécommunications, notamment pour installations téléphoniques, dans lesquelles des informations codées en binaire sont transmises par l'intermédiaire de lignes (C, L) comportant un conducteur pour chaque élément de code et dans lesquelles des informations émises sont aussi bien mémorisées dans le central d'émission (D) et envoyées à un comparateur (V), que récupérées après leur émission, par l'intermédiaire de la ligne (C, L), et dans lesquelles le comparateur (V) reçoit l'information récupérée et la compare à l'information mémorisée, et dans lesquelles en vue d'accroître la sécurité de contrôle, on utilise l'information ainsi qu'un complément formé par l'inversion de cette dernière et la comparaison est basée sur l'information et le complément, et dans lesquelles une information émise et son complément sont reçus après leur émission, par l'intermédiaire de la ligne (C, L), par un dispositif récepteur (T) et sont ensuite à nouveau émises par ce dernier par l'intermédiaire de la ligne, caractérisé par le fait que chacune des informations représentant des instructions standards se répétant en permanence, est mémorisée de façon individuelle, ainsi que son complément, dans une rangée continue d'unités d'une mémoire d'instructions (A), que lors de l'émission d'une information par l'intermédiaire de la ligne (C, L), le comparateur (V) inverse (dans T) l'information et son complément, après leur réception, notamment après une mémorisation temporaire (dans T), et réalise un décalage (dans W) des bits constituant l'information et des bits constituant le complément, ce qui a pour effet de réaliser une permutation de leurs emplacements à l'intérieur du comparateur (V), et que le comparateur (V) contrôle s'il existe une coïncidence entre le résultat de cette inversion (dans T) et de ce décalage (dans W) et l'information récupérée (par l'intermédiaire de U) et éventuellement le complément récupéré (par l'intermédiaire de U), et que l'information et son complément sont émis et réémis en permanence et selon une relation temporelle fixe.

4